(19)

Europäisches
Patentamt

European
Patent Office

Office européen
des brevets

(11) **EP 2 975 099 A1**

(12) **EUROPEAN PATENT APPLICATION**

(43) Date of publication:
**20.01.2016 Bulletin 2016/03**

(51) Int Cl.:
***C09K 5/12*** *(2006.01)*

(21) Application number: **14177276.4**

(22) Date of filing: **16.07.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicants:
 • **Siemens Aktiengesellschaft
  80333 München (DE)**
 • **NEM Energy B.V.
  2595 BN 'S-Gravenhage (NL)**

(72) Inventors:
 • **Heilmann, Pascal
  97705 Lauter (DE)**
 • **Roovers, Edwin
  2313JV Leiden (NL)**
 • **de Wispelaere, Steven
  2324WR Leiden (NL)**
 • **Übler, Matthias
  92289 Ursensollen (DE)**

(74) Representative: **Maier, Daniel Oliver
  Siemens AG
  Postfach 22 16 34
  80506 München (DE)**

(54) **Salt mixture**

(57)    The present invention relates to a mixture of inorganic nitrate salts comprising sodium nitrate and potassium nitrate in certain proportions which can be used both for the storage of thermal energy and as heat transfer fluid, for example within concentrated solar power (CSP) plants. Preferably the present invention may be used in thermodynamic solar systems with point-focusing, receiver-type power towers using heliostat mirror geometries on-ground.

The present invention may furthermore be used as heat transfer fluid in a number of applications for industrial processes involving heat exchanges in a wide range of temperatures.

In accordance with the invention there is provided an anhydrous, binary salt mixture, comprising potassium nitrate $KNO_3$ and sodium nitrate $NaNO_3$ wherein the $KNO_3$ content ranges from 60% by weight to 75% by weight, preferably from 63% by weight to 70% by weight and more preferably from 65% by weight to 68% by weight.

FIG 1

EP 2 975 099 A1

**Description**

The present invention relates to a mixture of inorganic nitrate salts comprising sodium nitrate and potassium nitrate in certain proportions which can be used both for the storage of thermal energy and as heat transfer fluid, for example within concentrated solar power (CSP) plants. Preferably the present invention may be used in thermodynamic solar systems with point-focusing, receiver-type power towers using heliostat mirror geometries on-ground.

The present invention may furthermore be used as heat transfer fluid in a number of applications for industrial processes involving heat exchanges in a wide range of temperatures.

Renewable energy from solar power towers is anticipated to be able to satisfy a significant portion of the energy demand in the upcoming decades. This form of emission-free, concentrating solar power (CSP) utilizes a multitude of so-called heliostats, i.e. sun-tracking, flat mirror geometries that focus the incident sun rays by reflection onto a spot located in the very top of a nearby solar tower. This so-called receiver is a highly sophisticated assembly in which a confined heat transfer fluid is heated up to high bulk temperatures, usually approximately 565°C. The hot heat transfer fluid is then pumped to a heat-exchanger of an ordinary water/steam cycle, in which feed water is vaporized via a three-stage process by an economizer, evaporator and super-heater section. The steam is then fed through a turbine to provide electricity by means of a generator. The supplied energy is then fed into the electrical power grid.

In order to be able to also produce electricity in the absence of sun (e.g. at night, during shady periods or prolonged bad weather periods) the heat transfer fluid is not only used to harvest heat in the receiver system in the power tower but also to store thermal energy. For this purpose, most of the hot heat transfer fluid is stored in large tanks. By doing so during sunny periods, the thermal storage system is charged with heat for later dispatch by feeding the then hot transfer fluid to the water/steam-cycle. This setup is known as a direct two-tank CSP system.

As the heat transfer fluid is being heated up to temperatures of roughly 565°C in daily cycles, the medium has to meet several requirements such as thermal stability, specific heat capacity, dynamic viscosity, thermal conductivity, vapor pressure and cost for continuous operation during a typical 30-year lifetime.

Prior art direct two-tank CSP systems typically employ molten salt mixtures as heat transfer fluid and thermal energy storage medium. A well known salt mixture, often referred to as Solar Salt, comprises sodium nitrate ($NaNO_3$) and potassium nitrate ($KNO_3$), wherein the $NaNO_3$ content is 60% by weight and the $KNO_3$ content is 40% by weight. This mixture has a liquidus temperature of 238°C and combines a high thermal stability at temperatures of up to ~585°C and a large specific heat capacity of roughly $1.55 \dfrac{\text{kJ}}{\text{kg} \cdot \text{K}}$ with a thermal conductivity of $0.5 \dfrac{\text{W}}{\text{m} \cdot \text{K}}$ and a dynamic viscosity of approximately 3 mPa•s at 300°C, while being non-toxic, low in corrosion tendency towards austenitic stainless steels and relatively cheap in salt investment costs. It is not only used in tower CSP systems but also as thermal energy storage medium in the known parabolic trough CSP plants with thermal storage capability.

Solar Salt, when exposed to air, starts decomposing irreversibly to alkali oxides via nitrites at about 600°C. The same is true for other known $NaNO_3/KNO_3$ mixtures such as eutectic $NaNO_3/KNO_3$ having a liquidus temperature of approximately 223°C.

Using fluids that can sustain even higher maximum temperatures is highly desirable as the Carnot efficiency of the overall system increases with the maximum temperature in the cycle.

One promising class of fluids contain the chlorides of lithium, sodium, potassium, caesium and/or strontium in the proper eutectic composition. Such fluids liquefy at temperatures of around 250°C and do not decompose at temperatures of up to 700°C and in some cases above. However, these fluids have several disadvantages. Components such as LiCl or CsCl are expensive or even unavailable in larger quantities. Also, chlorides demand expensive stainless steels to handle the corrosion and chromium depletion accompanied by liquid chloride attack. The tank system must not get into contact with any water since corrosion tendency accelerates tremendously when in contact with moisture, simultaneously forming hazardous, gaseous hydrogen chloride when overheated. Generally speaking, the disadvantages in using salt mixtures containing chlorides outweigh the advantages.

It is therefore an object of the present invention to provide a salt mixture that can sustain higher temperatures than the well-known 60/40 mixture of $NaNO_3$ and $KNO_3$ by weight while at the same time avoiding the disadvantages that come with the use of chlorides in such salt mixtures.

In accordance with the invention there is provided an anhydrous, binary salt mixture, comprising potassium nitrate $KNO_3$ and sodium nitrate $NaNO_3$ wherein the $KNO_3$ content ranges from 60% by weight to 75% by weight, preferably from 63% by weight to 70% by weight and more preferably from 65% by weight to 68% by weight.

In one preferred embodiment the $KNO_3$ content is 66.6% by weight and the $NaNO_3$ content is 33.4% by weight.

The invention also relates to the use of the salt mixture for transferring and/or storing energy; a heat transfer and/or thermal-energy storage fluid; a heat transfer process; and a concentrated solar power plant.

Advantageously, the salt mixture in accordance with the present invention employs the same inexpensive components, i.e. sodium nitrate and potassium nitrate as the well-known Solar Salt and can therefore be manufactured at low cost.

Surprisingly, the salt mixture in accordance with the present invention has almost identical thermo-physical properties (melting point, specific heat capacity, thermal conductivity and dynamic viscosity) but can sustain temperatures of up to 640°C (film temperature) with no or minimal decomposition. Allowing for a safety margin, the maximum system temperature can thus be increased to 620°C film temperature. The storage temperature can be increased to 585°C bulk temperature, such that for both thermal energy transfer and thermal energy storage a surplus of 20 Kelvin is gained in contrast to the prior art technology which operates at 565°C bulk temperature and 600°C maximum film temperature.

Advantageously, when compared to the prior art technology, a mixture in accordance with the present invention exhibits a substantially diminished, almost halved $NaNO_3$ content and is therefore significantly more stable at high temperatures, especially when high heating rates are applied. This is due to the fact that among $NaNO_3$ and $KNO_3$, $NaNO_3$ is the less stable compound. The nitrate/nitrite equilibrium, expressed as

$$NO_2\text{- } + 0.5\ O_2 \leftrightarrow NO_3\text{-} \qquad (1)$$

shifts in favor of $NO_2$- at higher temperatures. Higher heating rates may further increase the stability of the mixture due to non-equilibrium conditions.

Further advantages and objects of the present invention will become apparent from the following detailed description and the accompanying drawings, provided as non-limiting examples, wherein:

Figure 1 shows the melting and solidification behavior of the mixture in accordance with the present invention in comparison to Solar Salt;

Figure 2 shows the specific density of the mixture in accordance with the present invention plotted vs. temperature;

Figure 3 shows the dynamic viscosity of the mixture in accordance with the present invention plotted vs. temperature;

Figure 4 shows the thermal conductivity of the mixture in accordance with the present invention plotted vs. temperature;

Figure 5 shows the specific heat capacity of the mixture in accordance with the present invention plotted vs. temperature; and

Figure 6 shows key characteristics of the mixture in accordance with the present invention in comparison to Solar Salt in tabular form.

The present invention relates to a $KNO_3$-enriched formulation of the $NaNO_3/KNO_3$ binary system having a $KNO_3$ content of at least 60% by weight. In the preferred embodiment the $KNO_3$ content is 66.6% by weight and the $NaNO_3$ content is 33.4% by weight. It should be noted that there may be technical or other reasons for deviating from the preferred ratio and that such deviations are well within the scope of the present invention.

For example there may be imperfections in each step of the manufacturing process of either component $NaNO_3$ or $KNO_3$, and there may be further imperfections in mixing the two solid components. The components may also be impure to a certain extent, depending for example on the quality of the used raw materials. While such imperfections or impurities may lead to a slightly decreased performance of the mixture it may still bear the lesser overall cost to employ an imperfect manufacturing process and accept the decreased performance. For the purposes of the present invention, a binary salt mixture of N% $NaNO_3$ and M% $KNO_3$ mixture shall mean a mixture of essentially N% $NaNO_3$ and M% $KNO_3$ in the sense that N may deviate by $\pm$n and M may deviate by $\pm$m where n and m represent aforementioned impurities and imperfections. Note that in practical applications N + M cannot always be 100%, for example due to the presence of impurities.

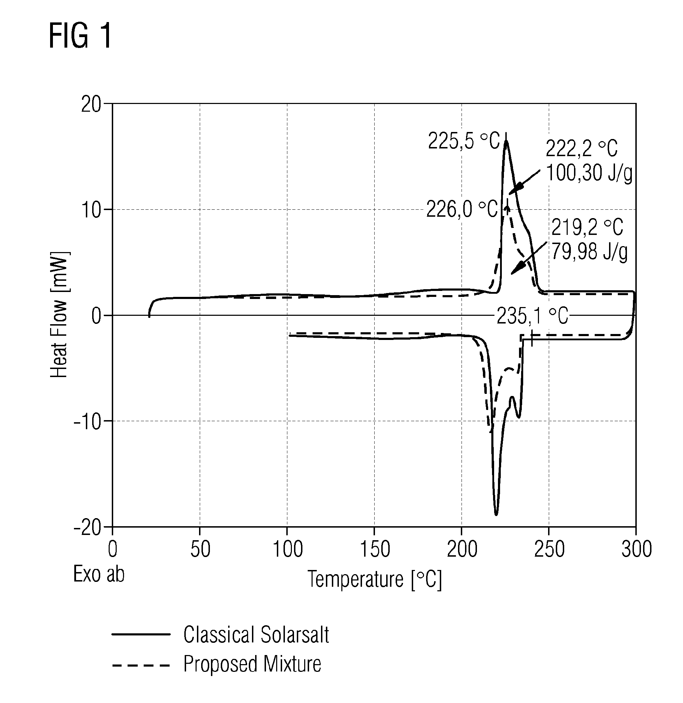

Referring now to Fig. 1, there is shown the melting and solidification behavior of a mixture having a $KNO_3$ content of 66.6% by weight and a $NaNO_3$ content of 33.4% by weight (dashed line). Also shown in Fig. 1 is the melting and solidification behavior of Solar Salt having a $KNO_3$ content of 40% by weight and a $NaNO_3$ content of 60% by weight (solid line). Both mixtures melt and solidify at almost the same temperature (225.5°C and 226°C, respectively) which is an important fact as it facilitates retrofitting existing systems with the novel mixture. More importantly, the novel mixture has a 20% lower heat of fusion compared to Solar Salt meaning that less energy is required to affect the phase change from solid to liquid.

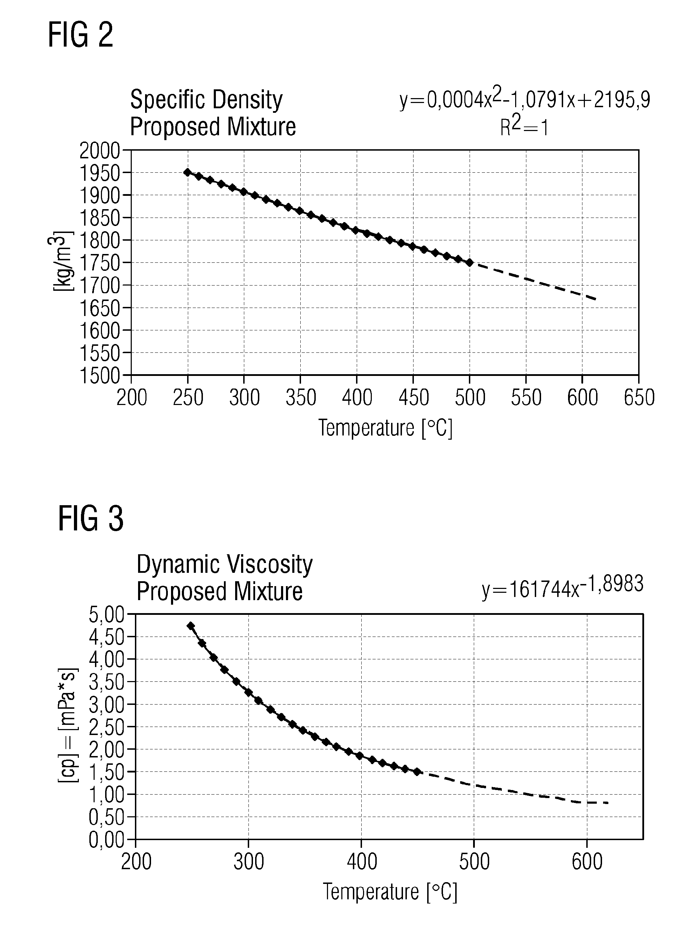

Referring now to Fig. 2, there is shown the specific density of the mixture in accordance with the present invention plotted vs. temperature. The specific density of the novel mixture almost linearly decreases as the temperature increases.

Referring now to Fig. 3, there is shown the dynamic viscosity of the mixture in accordance with the present invention plotted vs. temperature. As can be seen from Fig. 3 the dynamic viscosity decreases in non-linear fashion as the temperature increases.

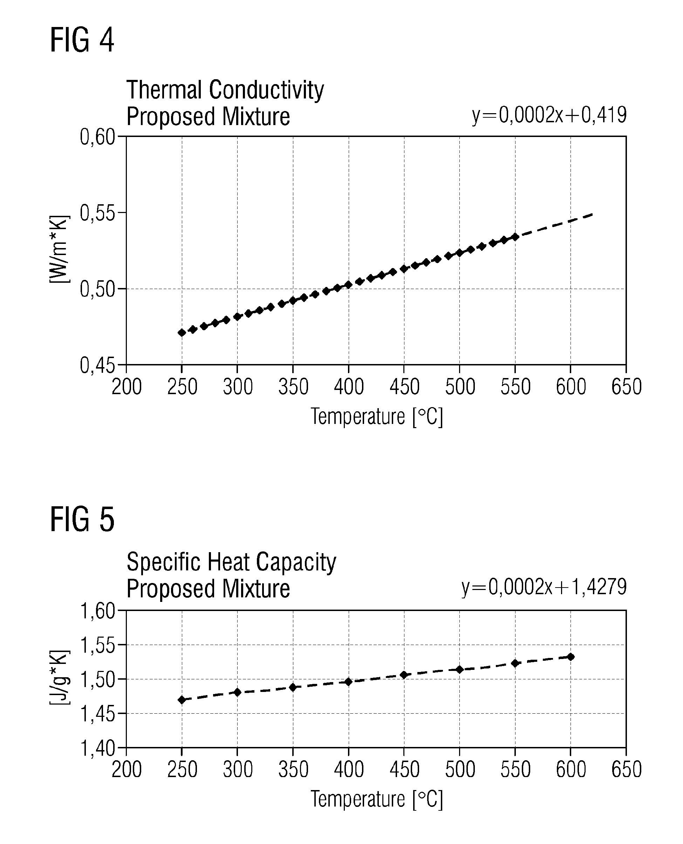

Referring to Fig. 4, there is shown the thermal conductivity of the mixture in accordance with the present invention plotted vs. temperature. In detail, the thermal conductivity slightly increases with the temperature.

Referring to Fig. 5, there is shown the specific heat capacity of the mixture in accordance with the present invention plotted vs. temperature. The specific heat capacity also increases slightly with the temperature.

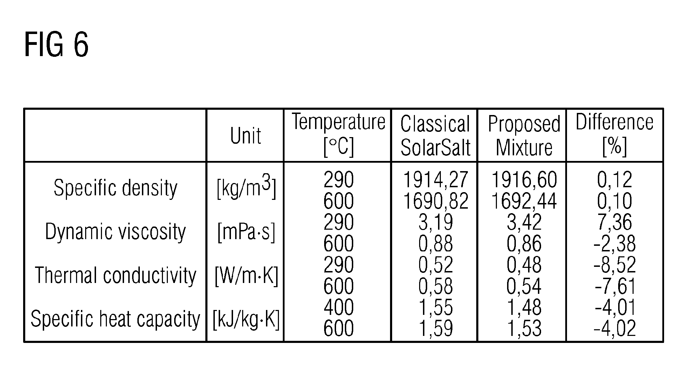

Referring to Fig. 6, there are shown some key characteristics of the mixture in accordance with the present invention in comparison to Solar Salt. Notably, the specific heat capacity of the novel mixture is about 4% lower than that of Solar Salt which means that about 4% more novel mixture is required to replace any given amount of Solar Salt in terms of accumulated enthalpy.

As discussed above, the novel mixture has a more favorable (i.e. lower) decomposition tendency into nitrites at film temperatures of 620°C or higher. By applying pump pressures in the CSP system's receiver unit of 20-30 bar or more, this tendency can be diminished further.

Exploiting the thermo-physical properties of the novel mixture, an extra of 20 Kelvin in maximum operational temperature during steady-state conditions can be achieved, enhancing the thermal stability limit to 585°C as bulk temperature. Also, covering and/or bubbling the storage tanks with air or pure oxygen at atmospheric pressure significantly reduces the rate of nitrite formation while keeping the mixture at said 585°C bulk temperature during day-charge. A system's thermal storage capability can be enhanced using the present invention as less salt is needed owing to the increased operating temperature span, thus compensating to some extent the effect described with reference to Fig. 6.

Moreover, since the ultimate heat-up stage of the molten salt formulation to approximately 620-640°C film temperature in the power tower receiver is realized by a sharp temperature transient for a very short time (corresponding to a high heating rate), this overheating, non-equilibrium procedure can be limited to a very short time frame. The present invention allows for an enhanced heat up to higher film temperatures compared to the prior art. With the application of pump pressures and/or covering with pressurized air and/or oxygen, the equilibrium condition (see chemical equation (1) above) of the nitrate decomposition is not reached and thus thermal degradation can be limited or even avoided.

The equilibrium constant K of the chemical reaction represented by equation (1) can be expressed as follows:

$$K = \frac{[NO_3^-]}{[NO_2^-]} \cdot \left( \sqrt{p_{O_2}} \right)^{-1} \qquad (2)$$

wherein $p_{O_2}$ represents the oxygen pressure and wherein K is expressed in units of $1/\sqrt{bar}$. For the eutectic mixture comprised of approximately equal molar portions of $KNO_3$ and $NaNO_3$, K is 18..20 $1/\sqrt{bar}$ at 600°C.

Evidently, the increase of the maximum allowable bulk and film temperature will increase the Carnot efficiency of the system, resulting in a decreased amount of salt required to generate and store an equivalent amount of output power.

As discussed with reference to Fig. 1, the inventive mixture also exhibits a 20% decrease in apparent heat of fusion due to its reduced $NaNO_3$ content but, as discussed with reference to Fig. 6, has a 4% lower specific heat capacity, the effects of which are compensated to some extent by the increased temperature range. Consequently, the very first melt-up procedure (i.e. the step of preparing the molten salt for the first time in the storage tanks) consumes approximately 16.5% less natural gas when the mixture in accordance with the present invention is used instead of Solar Salt.

Consider the following example:

A CSP plant with 1300 MWh (thermal) energy storage capacity (corresponding to 8 hours of thermal storage at 50 MW (electrical) output with a power block net efficiency of approximately 40%), employing classical SolarSalt with a heat of fusion of approximately 100 kJ/kg (equivalent to 27.8 kWh/ton), will require approximately 11415 metric tons of salt.

For a CSP plant of equal dimensions, employing the inventive mixture with a heat of fusion of approximately 80 J/g (equivalent to 22.2 kWh/ton), approximately 11917 metric tons of the salt mixture will be required (due to its 4% reduced specific heat capacity). Additionally, in an event of an accidental freeze-up, the mixture in accordance with the present invention will liquefy faster and more easily than Solar Salt.

**Claims**

1.  An anhydrous, binary salt mixture comprising potassium nitrate $KNO_3$ and sodium nitrate $NaNO_3$, wherein the $KNO_3$ content ranges from 60% by weight to 75% by weight, preferably from 63% by weight to 70% by weight and more preferably from 65% by weight to 68% by weight.

2.  The salt mixture of claim 1 wherein the $KNO_3$ content is 66.6% by weight and the $NaNO_3$ content is 33.4% by weight.

3.  The salt mixture according to any of the preceding claims wherein the liquidus temperature ranges from 235°C to 250°C.

4.  The salt mixture according to any of the preceding claims wherein the heat of fusion is less than 100 J/g.

5.  The salt mixture according to any of the preceding claims wherein the equilibrium constant K at 600°C at equilibrium conditions is equal to or higher than 20 $1/\sqrt{bar}$ .

6.  The salt mixture according to any of the preceding claims, wherein the weight loss is lower than 3% with respect to the initial weight for temperatures of approximately 635°C.

7.  Use of the mixture according to any of the preceding claims to transfer and/or store thermal energy.

8.  Use of the mixture according to claim 7 to transfer and/or store thermal energy in concentrated solar power plants.

9.  Use of the mixture according to claim 8 to transfer and/or store thermal energy in concentrated solar power plants with a power tower receiver unit.

10.  A heat transfer and/or thermal-energy storage fluid comprising the mixture according to any of the claims 1 to 6.

11.  A heat transfer process wherein the heat transfer fluid comprises the salt mixture according to any of the claims 1 to 6, **characterized in that** it operates in the temperature range from 250°C and 640°C, including the interval bounds.

12.  The heat transfer process according to claim 11, **characterized in that** the salt mixture is heated up to 640°C film temperature and that the heating ramp from 300°C to 640°C is preferably in the range of 100-1500 K/min, more preferably in the range of 300-1300 K/min and most preferably in the range of 500-1100 K/min during non-equilibrium conditions.

13.  The heat transfer process according to any of the claims 11 or 12, **characterized in that** internal pump pressure and/or applied air and/or pure oxygen gas phase pressure is preferably in the range of 1-40 bar, more preferably in the range of 1.5-30 bar, most preferably in the range of 2-25 bar.

14.  Concentrated solar power plant comprising at least a receiving pipe wherein the heat transfer fluid according to claim 10 flows, and/or at least a collecting device wherein the thermal energy storage fluid according to claim 10 is accumulated.

15.  Concentrated solar power plant according to claim 14 wherein the accumulated thermal energy storage fluid is heated up to a bulk temperature of 585°C and stored in the collecting device at steady-state conditions for later dispatch into a water/steam-cycle heat exchanger.

FIG 1

# FIG 2

Specific Density
Proposed Mixture

$y=0{,}0004x^2-1{,}0791x+2195{,}9$
$R^2=1$

# FIG 3

Dynamic Viscosity
Proposed Mixture

$y=161744x^{-1{,}8983}$

## FIG 4

Thermal Conductivity
Proposed Mixture                    $y=0{,}0002x+0{,}419$

## FIG 5

Specific Heat Capacity
Proposed Mixture                    $y=0{,}0002x+1{,}4279$

# FIG 6

|  | Unit | Temperature [°C] | Classical SolarSalt | Proposed Mixture | Difference [%] |
|---|---|---|---|---|---|
| Specific density | [kg/m$^3$] | 290 600 | 1914,27 1690,82 | 1916,60 1692,44 | 0,12 0,10 |
| Dynamic viscosity | [mPa·s] | 290 600 | 3,19 0,88 | 3,42 0,86 | 7,36 -2,38 |
| Thermal conductivity | [W/m·K] | 290 600 | 0,52 0,58 | 0,48 0,54 | -8,52 -7,61 |
| Specific heat capacity | [kJ/kg·K] | 400 600 | 1,55 1,59 | 1,48 1,53 | -4,01 -4,02 |

Europäisches
Patentamt

European
Patent Office

Office européen
des brevets

## EUROPEAN SEARCH REPORT

Application Number

EP 14 17 7276

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2007 052235 A1 (DEUTSCH ZENTR LUFT & RAUMFAHRT [DE]) 23 April 2009 (2009-04-23) * claims; figures 2,4 * | 1-7,10, 11 | INV. C09K5/12 |
| X | US 4 430 241 A (FIORUCCI LOUIS C [US]) 7 February 1984 (1984-02-07) * column 1, lines 7-11 * * column 2, line 33 - column 3, line 18 * * claims * | 1,6-11, 14 | |
| X | US 4 465 568 A (DOTSON RONALD L [US] ET AL) 14 August 1984 (1984-08-14) * column 1, line 45 - column 2, line 16 * * column 11, lines 26-36 * * claims * | 1,6,7,10 | |
| X | US 4 421 662 A (FIORUCCI LOUIS C [US] ET AL) 20 December 1983 (1983-12-20)  * column 1, lines 5-8 * * column 4, lines 19,20; claims * | 1,2, 7-11,14, 15 | |
| A | THOMAS BAUER ET AL: "Overview of molten salt storage systems and material development for solar thermal power plants", WORLD RENEWABLE ENERGY FORUM, WREF 2012, 17 May 2012 (2012-05-17), pages 1-8, XP055050134, Denver * the whole document * | 1-3, 7-11,14 | TECHNICAL FIELDS SEARCHED (IPC) C09K |
| X | DE 10 2011 083735 A1 (SIEMENS AG [DE]) 4 April 2013 (2013-04-04)  * the whole document * | 1,3, 7-11,14, 15 | |

-/--

The present search report has been drawn up for all claims

| Place of search | Date of completion of the search | Examiner |
|---|---|---|
| The Hague | 4 February 2015 | Puetz, Christine |

**EP 2 975 099 A1**

# EUROPEAN SEARCH REPORT

Application Number

EP 14 17 7276

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 7 588 694 B1 (BRADSHAW ROBERT W [US] ET AL) 15 September 2009 (2009-09-15) * the whole document * | 1-15 | |

TECHNICAL FIELDS SEARCHED (IPC)

The present search report has been drawn up for all claims

| Place of search | Date of completion of the search | Examiner |
|---|---|---|
| The Hague | 4 February 2015 | Puetz, Christine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 17 7276

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2015

| Patent document cited in search report | Publication date | Patent family member(s) | Publication date |
|---|---|---|---|
| DE 102007052235 A1 | 23-04-2009 | DE 102007052235 A1<br>EP 2201080 A1<br>US 2010258760 A1<br>WO 2009053245 A1 | 23-04-2009<br>30-06-2010<br>14-10-2010<br>30-04-2009 |
| US 4430241 A | 07-02-1984 | NONE | |
| US 4465568 A | 14-08-1984 | NONE | |
| US 4421662 A | 20-12-1983 | NONE | |
| DE 102011083735 A1 | 04-04-2013 | DE 102011083735 A1<br>WO 2013045317 A1 | 04-04-2013<br>04-04-2013 |
| US 7588694 B1 | 15-09-2009 | NONE | |

EPO FORM P0459

For more details about this annex : see Official Journal of the European Patent Office, No. 12/82 ,